# DEMANDE DE BREVET EUROPEEN

(11) **EP 0 837 272 A1**
(43) Date de publication de la demande: **22.04.1998**
(21) Numéro de dépôt: 97402186.7
(22) Date de dépôt: 19.09.1997
(51) Int. Cl.: F16K 17/28

(54) **Dispositif de réarmement d'une soupape de sûreté**

(30) Priorité: 21.10.1996 FR 9612737
(71) Demandeur: BRIFFAULT, Société dite:, F-75011 Paris (FR)
(72) Inventeur: Morel, Marc, 76300 Sotteville-les-Rouen (FR); Schladerer, Max, 27610 Romilly-sur-Andelle (FR)
(74) Mandataire: Eidelsberg, Victor Albert

(57) **Abrégé**

Dans ce conduit constitué de deux tronçons (1, 3) enfilés l'un à l'autre et pouvant se déplacer l'un par rapport à l'autre, il est prévu un élément (6) disposé de manière à déplacer ou à déformer un siège (7) coopérant avec un obturateur (8).

## Description

La présente invention se rapporte aux conduits constitués de deux tronçons enfilés l'un dans l'autre et retenus l'un à l'autre par des moyens de retenue tels qu'ils autorisent un déplacement de l'un des tronçons par rapport à l'autre d'un état de réarmement dans lequel des moyens d'obturation ne peuvent pas empêcher du fluide de passer d'amont en aval à un autre état dans lequel les moyens d'obturation peuvent prendre une position empêchant du fluide de passer ou une position en laissant passer. Les moyens d'obturation comportent un obturateur appliqué sur un siège. Il est prévu des moyens de séparation de l'obturateur et du siège pour venir dans l'état de réarmement.

Dans le présent mémoire, on entend par tronçon aussi bien un tube souple qu'un tuyau rigide ou élastique et qu'une tubulure issue d'un appareillage et également une rotule en forme de conduit. L'invention trouve une application de choix dans les conduits de gaz.

Lorsqu'une bouteille de gaz est reliée à un appareil utilisateur par un conduit, il est souhaitable, en cas d'excès de débit, par exemple parce que le conduit n'est pas relié à la gazinière ou par rupture du conduit juste en amont de la gazinière, d'avoir une sécurité. Il convient néanmoins de réarmer lorsque la cause de l'excès de débit a disparu. A cet effet, il est connu de prévoir une fuite permanente qui permet d'effectuer ce réarmement. Mais cette solution si elle est possible dans les applications à l'extérieur, par exemple de camping, ne l'est pas à l'intérieur des habitations.

Au WO95/05554 on décrit un dispositif de sécurité du type indiqué ci-dessus, qui outre le fait qu'il est très complexe, tant à fabriquer qu'à monter, présente l'inconvénient qu'un poussoir est monté en aval juste derrière l'obturateur sous forme de bille. Ce poussoir crée des pertes de charge néfastes.

L'invention vise à remédier à cet inconvénient par un conduit bien plus simple que les conduits antérieurs qui, pour se réarmer, ne nécessite d'effectuer qu'un mouvement que l'utilisateur a naturellement tendance à effectuer lorsqu'il constate que du gaz ne sort plus du conduit et qui néanmoins crée moins de perte de charge que les solutions préconisées jusqu'ici.

Suivant l'invention, les moyens de séparation ne s'étendent qu'en dehors de l'axe du tronçon dans lequel ils sont disposés. Ils peuvent comprendre, suivant une variante, un élément disposé de manière à déplacer ou à déformer le siège dans l'état de réarmement.

On ne cherche plus, comme dans le document antérieur mentionné précédemment, à déplacer la bille par un poussoir nécessairement centré sur la bille et qui constituera un obstacle au passage du fluide. En agissant par exemple sur le siège, on peut reporter l'élément qui gêne le passage du fluide radialement vers l'extérieur, en sorte que la perte de charge qu'il crée est pratiquement négligeable. L'axe du tronçon peut être aussi simplement sa ligne centrale, s'il n'est pas de révolution, l'essentiel étant que la partie centrale du tronçon soit bien dégagée pour le passage du fluide.

De préférence, l'élément est un anneau dont l'ouverture n'est inférieure que de peu au diamètre de l'obturateur. L'anneau empêche ainsi la bille de sortir puisque son diamètre est inférieur à celui de la bille formant obturateur, mais comme le diamètre de l'anneau est aussi grand possible, il porte peu atteinte au passage du fluide au milieu du conduit. En outre, monter l'élément sous forme d'anneau, par exemple en faisant en sorte que cet élément soit solidaire de l'un des tronçons et, de préférence, soit d'une pièce avec ce tronçon, facilite beaucoup le montage et la fabrication.

Suivant un mode de réalisation préféré, les moyens de retenue autorisent un déplacement suivant l'axe commun des tronçons avec possibilité de rotation d'un tronçon par rapport à l'autre, mais, il est possible également que le déplacement s'effectue par une inclinaison de l'un des tronçons par rapport à l'autre.

Il est prévu des moyens de rappel, notamment un ressort, ramenant les tronçons de l'état de réarmement à l'autre état lorsque l'utilisateur n'agit pas sur le conduit. On notera également que l'on passe de l'état de réarmement à l'autre état par un mouvement de traction ou de poussée le long de l'axe du conduit ou, le cas échéant, par un mouvement d'inclinaison, que l'utilisateur a tendance naturellement à effectuer lorsqu'il constate que du gaz ne sort plus du conduit.

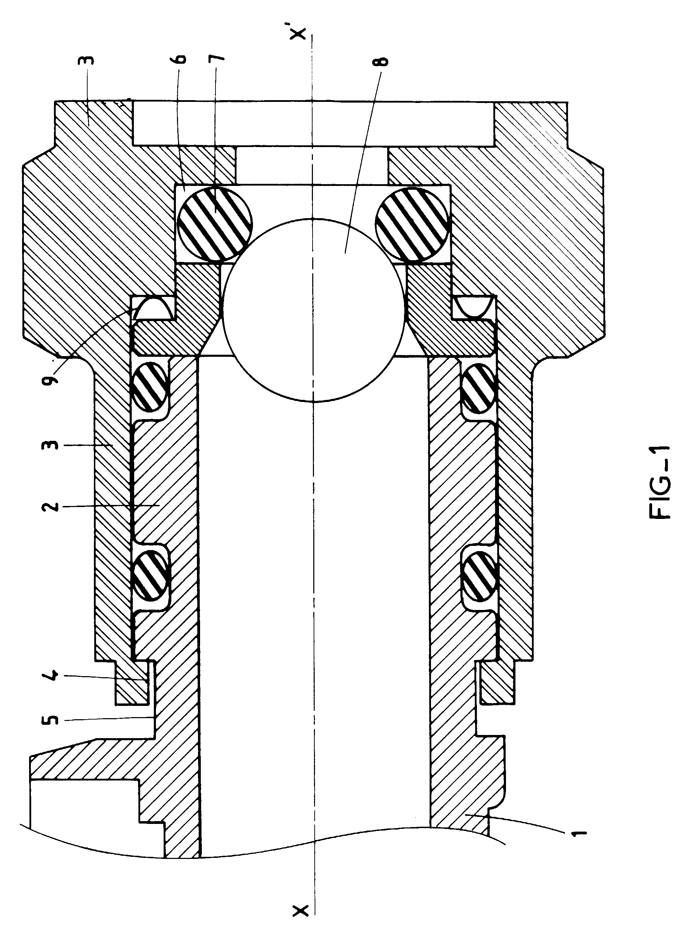

La figure 1 au dessin annexé, donné uniquement à titre d'exemple, est une vue en coupe d'un embout de détendeur suivant l'invention.

En se reportant à la figure 1, du détendeur 1 part une tubulure constituant un tronçon 2 intérieur qui est enfilé dans un tronçon 3 extérieur, lequel tronçon 3 peut tourner librement dans le tronçon 2. Le tronçon 3 extérieur comporte à l'extrémité un rebord 4 périphérique qui vient se loger dans une gorge 5 du premier tronçon 2. La gorge 5 a une dimension plus grande que le rebord 4, considérée dans la direction de l'axe XX' des deux tronçons, en sorte que l'on peut déplacer axialement le tronçon 3 par rapport au tronçon 2, sans pour autant que les tronçons cessent d'être étanches et reliés l'un à l'autre.

Dans un épaulement 6 annulaire du tronçon 3 est logé un joint 7 torique formant siège pour une bille 8 en acier servant d'obturateur. L'ouverture de l'anneau 6 est inférieure de 1 mm au diamètre de la bille 8.

La position représentée à la figure 1 est celle de sécurité dans laquelle il s'est produit un excès de débit en sorte que la bille 8 a été repoussée sur le joint 7 torique et empêche du gaz de passer dans le tronçon 3 au delà du tronçon 2. Pour réamorcer, il suffit que l'utilisateur rapproche axialement les tronçons 2 et 3 en rapprochant le rebord 4 du détendeur 1. Ce faisant, il déforme le joint 7 en sorte que l'étanchéité n'est plus assurée et que du gaz peut à nouveau passer dans le tronçon 3. Dès que la pression de part et d'autre de la bille est la même, celle-ci retombe en direction du détendeur 1. Dès que l'utilisateur cesse de rapprocher les tronçons 2 et 3, ceux-ci reprennent la position représentée à la figure 1 sous l'action d'un ressort 9 qui tend à les éloigner à nouveau dans la direction axiale.

## Revendications

1. Conduit constitué de deux tronçons enfilés l'un dans l'autre et retenus l'un à l'autre par des moyens (4, 5) de retenue tels qu'ils autorisent un déplacement de l'un des tronçons par rapport à l'autre d'un état de réarmement dans lequel des moyens d'obturation ne peuvent pas empêcher du fluide de passer d'amont en aval à un autre état dans lequel les moyens d'obturation peuvent prendre une position empêchant du fluide de passer ou une position en laissant passer, les moyens d'obturation comportant un obturateur (8) appliqué sur un siège (7) et il est prévu, en aval de l'obturateur (8), des moyens de séparation de l'obturateur (8) et du siège (7) pour venir dans l'état de réarmement, caractérisé en ce que les moyens de séparation ne s'étendent qu'en dehors de l'axe du tronçon dans lequel ils sont disposés.

2. Conduit suivant la revendication 1, caractérisé en ce que les moyens de séparation comprennent un élément (6) disposé de manière à déplacer ou à déformer le siège (7) dans l'état de réarmement.

3. Conduit suivant la revendication 2, caractérisé en ce que l'élément (6) est un anneau dont l'ouverture n'est inférieure que de peu au diamètre de l'obturateur (8).

4. Conduit suivant la revendication 2 ou 3, caractérisé en ce que l'élément (6) est solidaire de l'un des tronçons (3) et, de préférence, est d'une pièce avec ce tronçon.

5. Conduit suivant l'une des revendications 1 à 4, caractérisé en ce que les moyens de retenue autorisent un déplacement suivant l'axe commun des tronçons, avec possibilité de rotation d'un tronçon par rapport à l'autre.

6. Conduit suivant l'une des revendications 1 à 5, caractérisé par des moyens (9) de rappel ramenant les tronçons de l'état de réarmement à l'autre état.
